# EUROPEAN PATENT SPECIFICATION

(11) **EP 2 423 799 B1**
(45) Date of publication and mention of the grant of the patent: **21.04.2021**
(21) Application number: 11178860.0
(22) Date of filing: 25.08.2011
(51) Int. Cl.: G06F 3/0484, G06F 3/0488, G06F 9/451, G06F 3/01

(54) **TERMINAL DEVICE TO STORE OBJECT AND ATTRIBUTE INFORMATION AND METHOD THEREFOR**
ENDGERÄT ZUR SPEICHERUNG EINES OBJEKTS UND ATTRIBUTINFORMATIONEN UND VERFAHREN DAFÜR
DISPOSITIF DE TERMINAL POUR STOCKER DES INFORMATIONS D'OBJET ET D'ATTRIBUT ET PROCEDE ASSOCIE

(30) Priority: 25.08.2010 KR 20100082693
(43) Date of publication of application: 29.02.2012
(73) Proprietor: Pantech Corporation, Seoul 06748 (KR)
(72) Inventor: Park, Won-Seok, 121-792 Seoul (KR); Kim, Kwang-Lea, 121-792 Seoul (KR)
(74) Representative: Schmitt-Nilson Schraud Waibel Wohlfrom Patentanwälte Partnerschaft mbB

(56) References cited:
- EP-A1- 2 068 236
- WO-A1-2011/106443
- US-A1- 2002 087 598
- US-A1- 2002 149 569
- US-A1- 2011 098 056

## Description

### CROSS-REFERENCE TO RELATED APPLICATION

This application claims priority from and the benefit under 35 U.S.C. § 119(a) of Korean Patent Application No. 10-2010-0082693, filed on August 25, 2010.

### BACKGROUND

### FIELD

The following description relates to augmented reality (AR), and particularly, to a terminal device to store an object and a method for storing an object in the terminal device.

### DISCUSSION OF THE BACKGROUND

Augmented reality (AR) combines a physical real-world environment with a virtual world with an additional image. AR can provide additional information, which may be difficult to obtain solely from a real world environment, by combining virtual objects and a view of the real world environment, whereas virtual reality (VR) can only provide virtual space and virtual objects. Various research has been conducted on AR services in many countries, such as the United States and Japan, since the late 1990s. Improvements in the computing capability of mobile devices, such as mobile terminals, personal digital assistants (PDAs), and ultra mobile personal computers (UMPCs), and recent developments in wireless networking have opened the way for various AR services.

Mobile devices that allow for a display of various types of information are known. for example, a mobile device (e.g., a smart phone) is known from EP 2 068 236 A1, including a display unit, which is divided into several subregions, and a control unit, to control the display unit to change the display screen according to a selection of a user. Information is displayed on the display screen according to preferences set by the user.

A method for reconfiguring the display of a mobile device is known from US 2002/0149589 A1

WO2011/106443 A1, prior art under Article 54(3) EPC, discloses a smart phone that senses audio, imagery, and/or other stimulus from a user's environment, and acts autonomously to fulfil inferred or anticipated user desires.

For example, an image of a real-world environment captured by the camera of a mobile phone may be merged with attribute information of each object detected from the captured image, and the merged result may be displayed on the display unit of the mobile phone as an AR view. Conventionally, however, objects and their attribute information obtained from one location are unavailable in other locations. Thus, in order to use the objects and their attribute information again once they are no longer available, it would be necessary to revisit the location where the attribute information of the objects was originally obtained or access the Web, which may be inconvenient for users.

### SUMMARY

The invention is defined by the appended independent claims; dependent claims define preferred embodiments. Exemplary embodiments of the present invention provide for storing an object identified from an augmented reality (AR) view displayed on the display unit of a terminal device and its attribute information in the terminal device.

Exemplary embodiments of present invention also provide for determining the order in which multiple pieces of attribute information of an object are displayed on the display unit of the terminal device based on the preference of a user.

Exemplary embodiments of present invention also relate to sharing various objects and their respective attribute information present in a terminal device between multiple users.

Additional features of the invention will be set forth in the description which follows, and in part will be apparent from the description, or may be learned by practice of the invention.

An exemplary embodiment of the present invention provides a terminal device for storing an image and attribute information of an object in a user database, according to claim 1.

An exemplary embodiment of the present invention provides a method for storing an image and attribute information of an object in a user database, according to claim 10.

An exemplary embodiment of the present invention also provides a display user interface device, including: a first region in which one or more objects detected from an image captured by a camera and one or more pieces of attribute information of the one or more objects are displayed, the one or more pieces of attribute information being received from an object server; and a second region which recognizes an object selected from the first region and stores the one or more pieces of attribute information of the recognized object.

An exemplary embodiment of the present invention also provides a method for displaying augmented reality, the method including: capturing an image of an object; receiving attribute information about the object; obtaining a determined preference level for the attribute information; redetermining the preference level for the attribute information based on usage of the attribute information; and displaying the object and the attribute information, the attribute information being displayed according to the redetermined preference level.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 is a block diagram of a terminal device to store an object therein according to an exemplary embodiment of the present invention.
FIG. 2 is a diagram illustrating of an object and attribute information according to an exemplary embodiment of the present invention.
FIG. 3 is a flowchart of a method for storing an object in a terminal device according to an exemplary embodiment of the present invention.
FIG. 4 is a flowchart of a method for storing an image and attribute information of an object in a user database of a terminal device according to an exemplary embodiment of the present invention.
FIG. 5 is a diagram illustrating a display user interface device according to an exemplary embodiment of the present invention.

### DETAILED DESCRIPTION

Exemplary embodiments are described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present. Further, it will be understood that for the purposes of this disclosure, "at least one of', and similar language, will be interpreted to indicate any combination of the enumerated elements following the respective language, including combinations of multiples of the enumerated elements. For example, "at least one of X, Y, and Z" will be construed to indicate X only, Y only, Z only, or any combination of two or more items X, Y, and Z (e.g., XYZ, XZ, YZ).

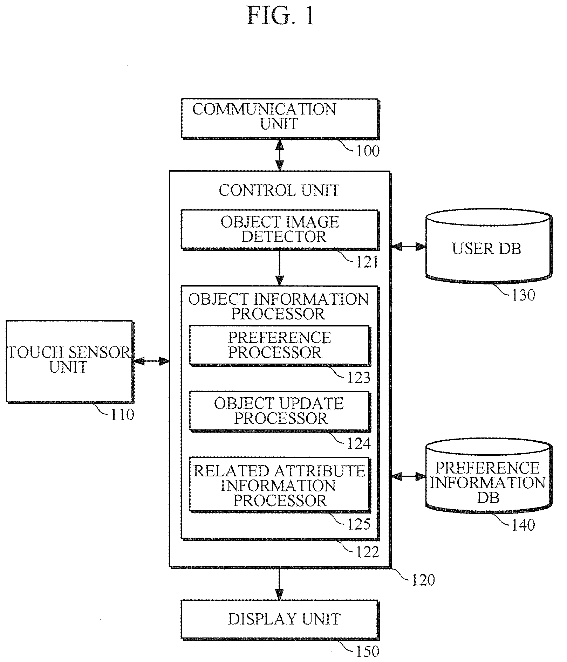

FIG. 1 is a block diagram of a terminal device capable of storing an object therein according to an exemplary embodiment of the present invention. The terminal device may include a communication unit 100, a touch sensor unit 110, a control unit 120, a user database ("DB") 130, a preference information DB 140, and a display unit 150. The communication unit 100 may wirelessly communicate data with an object server (not shown). The terminal device may transmit to the object server information about an object, if any, displayed on the display unit 150, and may receive from the object server attribute information about the object. The object server may store the images and attribute information of multiple objects therein. In short, the terminal device may receive attribute information of the object displayed on the display unit 150 from the object server.

If multiple objects are displayed on the display unit 150 of the terminal device, the touch sensor unit 110 may determine whether and which objects displayed on the display unit 150 of the terminal device are selected. In an exemplary embodiment, the terminal device may be equipped with an input device, such as a touch screen. The touch sensor unit 110 may sense at least one object, if any, selected from the touch screen by a user.

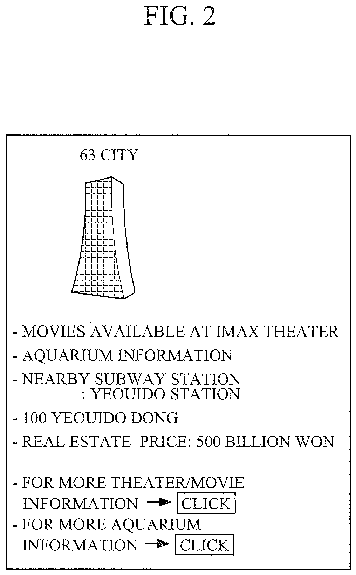

The control unit 120 may control the object sensed by the touch sensor unit 110 and attribute information of the sensed object received from the object server to be stored in the user DB 130. The attribute information may be detailed information about the sensed object. The control unit 120 may share the sensed object and the attribute information of the sensed object with another terminal device. The sensed object and attribute information about the sensed object may be displayed together on the display unit 150 of the terminal device, for example, as shown in FIG. 2 .

FIG. 2 is a diagram illustrating an object and attribute information according to an exemplary embodiment of the present invention. Referring to FIG. 2 , an object "63 City" is the object sensed by the touch sensor unit 110, and information specifying various facilities (such as a theater or aquarium) housed in the "63 City" and traffic and real estate information for the area around the "63 City" may be provided as attribute information about the object "63 City".

Referring again to FIG. 1 , the control unit 120 may control the object sensed by the touch sensor unit 110 and attribute information to be stored in the user DB 130 with the aid of an object image detector 121 and an object information processor 122.

The object image detector 121 may detect an image of an object selected through the touch sensor unit 110 by the user.

The object information processor 122 may store the detected object image and attribute information of the selected object in the user DB 130 upon the request of the user, or may transmit the detected object image and the attribute information of the selected object to the object server. In an exemplary embodiment, the object information processor 122 may store the selected object and its attribute information in the user DB 130 in response to a drag-and-drop action performed on the selected object by the user. For example, the drag-and-drop action may be performed by keystrokes, a mouse, or through a touch screen. The object information processor 122 may arrange the attribute information of the selected object in the user DB 130 according to the preference of the user. The arrangement of the attribute information of the selected object according to the preference of the user may be performed by a preference processor 123 of the object information processor 122.

If the selected object has multiple pieces of attribute information, the preference processor 123 may determine the preference levels of the multiple pieces of attribute information based on preference information stored in a preference information DB 140. The terminal device may share the preference information with another terminal device. The preference processor 123 may determine the order in which the multiple pieces of attribute information are displayed on the display unit 150 of the terminal device based on the determined preference levels. The preference information stored in the preference information DB 140 may be information provided by the user for use in determining the order in which multiple pieces of attribute information are displayed on the display unit 150 of the terminal device. Further, the preference information may indicate an amount of attribute information to be displayed by the terminal device. The preference information DB 140 may store multiple object attribute fields such as 'Economy,' 'Entertainment,' and 'Culture & Education,' and the user may be allowed to set preferences among the object attribute fields. For example, the user may allocate a highest preference level to the 'Entertainment' field, a second highest preference level to the 'Culture & Education,' and a lowest preference level to the 'Economy' field. The preferences among the object attribute fields are stored in the preference information DB 140 as preference information, and the preference processor 123 may determine the preference levels of the plurality of pieces of attribute information of the selected object based on the preference information. For example, if the selected object is the "63 City" and traffic, real estate, theater, and aquarium information of the "63 City" are provided as attribute information, then the preference processor 123 may determine the preference levels of the traffic, real estate, theater and aquarium information and may determine the order in which the traffic, real estate, theater and aquarium information is displayed on the display unit 150 of the terminal device.

The object information processor 122 may store a detected image of the selected object, provided by the object image detector 121, the multiple pieces of attribute information of the selected object and the order in which the multiple pieces of attribute information of the selected object are displayed on the display unit 150 of the terminal device, determined by the preference processor 123, in the user DB 130.

The preference processor 123 may redetermine the order of display of the multiple pieces of attribute information of the selected object based on usage information stored in the user DB 130 and/or the preference information stored in the preference information DB 140. The usage information may specify at least one of or each of the frequency, duration and location of use of each of the plurality of pieces of attribute information. The user DB 130 may store multiple object images, and the user may select one of the object images. If any one of a number of pieces of attribute information corresponding to the selected object image is selected, then usage information about the selected piece of attribute information, including the frequency, duration and location of the selected piece of attribute information, may also be stored in the preference information DB 140. The preference processor 123 may periodically redetermine the order in which a number of pieces of attribute information of each object are displayed on the display unit 150 of the terminal device based on the usage information and the preference information stored in the preference information DB 140. For example, if the traffic information for the area around the 63 City is more frequently used in a given day, week or month, the preference level of the traffic information for the area around the 63 City may be increased, or the traffic information for the area around the 63 City may be highlighted when displayed on the display unit 150 of the terminal device, and may thus become easily distinguishable from the other attribute information of the 63 City. Further, the preference level may be increased or the traffic information may be highlighted during those times when the traffic information is determined to be more frequently used. Therefore, the user can easily identify which of the pieces of attribute information of the 63 City is most frequently used. In other words, the preference processor 123 may redetermine the preference levels of a number of pieces of attribute information about an object based on their frequency of use and the preference of the user, and may then redetermine the order in which the pieces of attribute information are displayed on the display unit 150 of the terminal device.

The object information processor 122 may also include an object update processor 124. If at least one object image and attribute information corresponding to the at least one object image are displayed on the display unit 150 of the terminal device upon the request of the user, the object update processor 124 may receive updates, if any, of the attribute information from the object server and may display the received updates on the display unit 150 of the terminal device. For example, if an image of the 63 City is selected from the user DB 130, the object update processor 124 may issue a request for updated attribute information of the 63 City from the object server, receive updated attribute information, if any, of the 63 City from the object server and display the received updated attribute information on the display unit 150 of the terminal device together with the image of the 63 City. Therefore, the user can be provided with updated attribute information for each object image present in the terminal device in almost real time.

If an image of an object and attribute information about the object are displayed on the display unit 150 of the terminal device upon the request of the user, then the object information processor 122 may display related attribute information, i.e., additional information related to the attribute information, on the display unit 150 of the terminal device with the aid of a related attribute information processor 125. By way of example, referring to FIG. 2 , the related attribute information processor 125 provides a related attribute information guide, which is a guide to related information about the theater and the aquarium information, and provides the related attribute information guide on the display unit 150 of the terminal device. The user can be provided with information about various theaters or aquariums, other than the theater or aquarium in the 63 City, by selecting the related attribute information guide from the display unit 150 of the terminal device. In exemplary embodiments, the related attribute information may be provided on the display unit 150 of the terminal device. Although described above as being included in the terminal device, aspects need not be limited thereto such that the user DB 130, the preference information DB 140, and the display unit 150 may connected to the terminal device via a wired and/or wireless network and may be external to the terminal device.

It will hereinafter be described in detail how the terminal device stores an object therein.

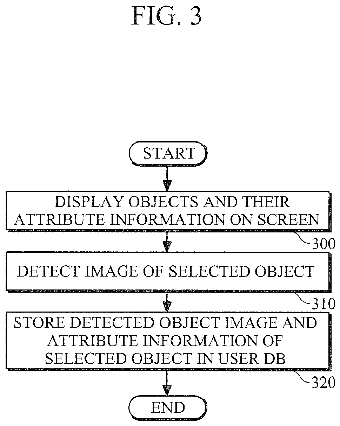

FIG. 3 is a flowchart of a method for storing an object in a terminal device according to an exemplary embodiment of the present invention. Although depicted as being performed serially, those skilled in the art will appreciate that at least a portion of the operations of the method of FIG. 3 may be performed contemporaneously, or in a different order than presented in FIG. 3 .

Referring to FIG. 3 , in operation 300, a terminal device capable of displaying an object and attribute information associated with the object may receive the images and attribute information of a number of objects currently being displayed on the display unit from an object server. The terminal device displays the received object images and the received attribute information on a display unit. In other words, if one or more objects are displayed via the display unit of the terminal device, the terminal device may transmit information on each of the displayed objects to the object server and may receive attribute information about each of the displayed objects from the object server.

In operation 310, if at least one of the displayed objects is selected by a user, the terminal device may detect an image of the selected object. In other words, the terminal device may determine whether at least one of the displayed objects is selected by the user and may detect the image of the selected object.

In operation 320, the terminal device may store the detected image of the selected object and a number of pieces of attribute information about the selected object in a user DB upon the request of the user. In an exemplary embodiment, there may be multiple pieces of attribute information. In an exemplary embodiment, the terminal device may also transmit the detected image of the selected object and the attribute information of the selected object to the object server upon the request of the user. Thus, other users can also use the detected image of the selected object and the attribute information of the selected object from the object server. In an exemplary embodiment, the terminal device may either store the detected image of the selected object and the pieces of attribute information about the selected object in the user DB or transmit the detected image of the selected object and the pieces of attribute information about the selected object to the object server in response to a drag-and-drop action performed on the selected object.

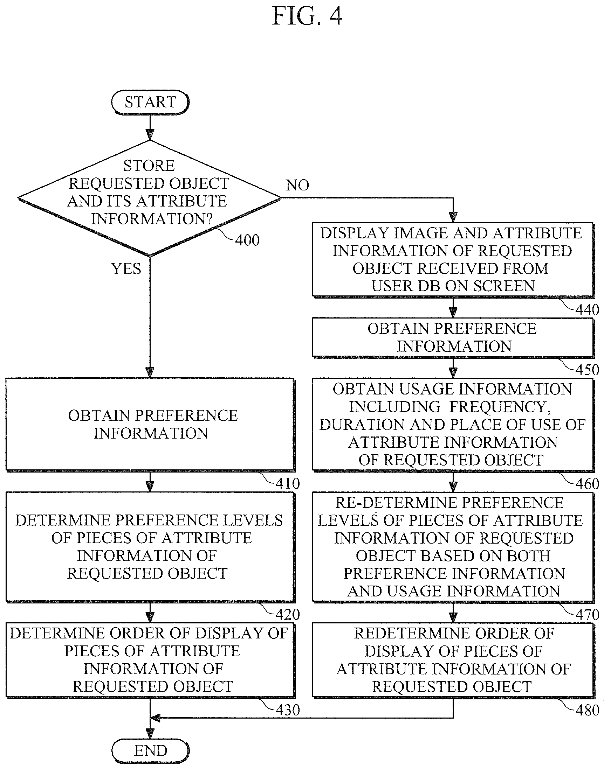

How to store an image and attribute information of an object in a user DB of a terminal device will hereinafter be described in detail with reference to FIG. 4 .

FIG. 4 is a flowchart of a method for storing an image and attribute information of an object in a user DB of a terminal device according to an exemplary embodiment of the present invention. Although depicted as being performed serially, those skilled in the art will appreciate that at least a portion of the operations of the method of FIG. 4 may be performed contemporaneously, or in a different order than presented in FIG. 4 .

Referring to FIG. 4 , in operation 400, a terminal device determines whether a request for the storage of an image and attribute information of an object requested by a user has been received.

If it is determined in operation 400 that a request for the storage of the image and the pieces of attribute information of the requested object has been issued, then in operation 410, the terminal device may acquire preference information about the requested object from a preference information DB. The preference information may be information provided by the user for reference in the arrangement of the pieces of attribute information of the requested object.

In operation 420, the terminal device determines the preference levels of the pieces of attribute information based on the acquired preference information.

In operation 430, the terminal device may determine the order in which the pieces of attribute information of the requested object are displayed by the display unit of the terminal device, based on the preference levels determined in operation 420, and may store the pieces of attribute information of the requested object and the results of the determination in a user DB. By way of example, multiple object attribute fields such as 'Economy,' 'Entertainment,' and 'Culture & Education' may be stored in the preference information DB of the terminal device. The user may set preferences among the object attribute fields present in the preference information DB of the terminal device. For example, the user may allocate a highest preference level to the 'Entertainment' field, a second highest preference level to the 'Culture & Education' field and a lowest preference level to the 'Economy' field. The terminal device may classify the pieces of attribute information of the requested object into the 'Entertainment' field, the 'Culture & Education' field and the 'Economy' field. The terminal device may determine the preference levels of the pieces of attribute information of the requested object based on the results of the classification, and may determine the order in which the pieces of attribute information of the requested object are displayed on the display unit of the terminal device, based on their respective preference levels. For example, if the requested object is the "63 City" and the pieces of attribute information of the requested object include: traffic, real estate, aquarium and theater information, the terminal device may determine the preference levels of the traffic, real estate, aquarium and theater information based on their respective object attribute fields' preference levels. The device may determine the order in which the traffic, real estate, aquarium and theater information are displayed on the display unit of the terminal device based on their respective preference levels. Thereafter, the terminal device may store an image of the "63 City" and the traffic, real estate, aquarium and theater information in the user DB.

If in operation 400, a request for the storage of an object and pieces of attribute information of the object was not received the method proceeds to operation 440. In operation 440, the terminal device obtains the image and the attribute information about the requested object from the user DB, and displays the obtained image and the obtained attribute information on a display unit.

In operation 450, the terminal device may obtain preference information about the attribute information from the preference information DB. The preference levels for each piece of attribute information may be determined after receipt of the preference information or may be predetermined. In operation 460, the terminal device may obtain usage information about the received attribute information from the user DB.

In operation 470, the terminal device may redetermine the order in which the pieces of attribute information of the requested object are displayed on the display unit of the terminal device based on the obtained preference and usage information.

In operation 480, the terminal device may redetermine the order in which the pieces of attribute information of the requested object are displayed on the display unit of the terminal device, based on the redetermined preference levels of the pieces of attribute information of the requested object, and may store the results of the redetermination. By way of example, a user may select at least one of multiple object images present in the user DB. If one of a number of pieces of attribute information corresponding to the selected object image is selected, then the terminal device may store usage information, such as the frequency, duration and location of use of the selected piece of attribute information in the preference information DB. The terminal device may periodically redetermine the order in which the pieces of attribute information corresponding to the selected object image should be displayed on the display unit of the terminal device with reference to the usage information stored in the usage information and preference information stored in the preference information DB.

For example, if traffic information for the area around the 63 City is more frequently used in a given day, week or month, the preference level of the traffic information may be increased, or the traffic information may be highlighted when displayed on the display unit of the terminal device, and may thus become easily distinguishable from other attribute information of the 63 City. Further, the preference level may be increased or the traffic information may be highlighted during those times when the traffic information is determined to be more frequently used. Therefore, the user can easily identify which of the pieces of attribute information of the 63 City is most frequently used.

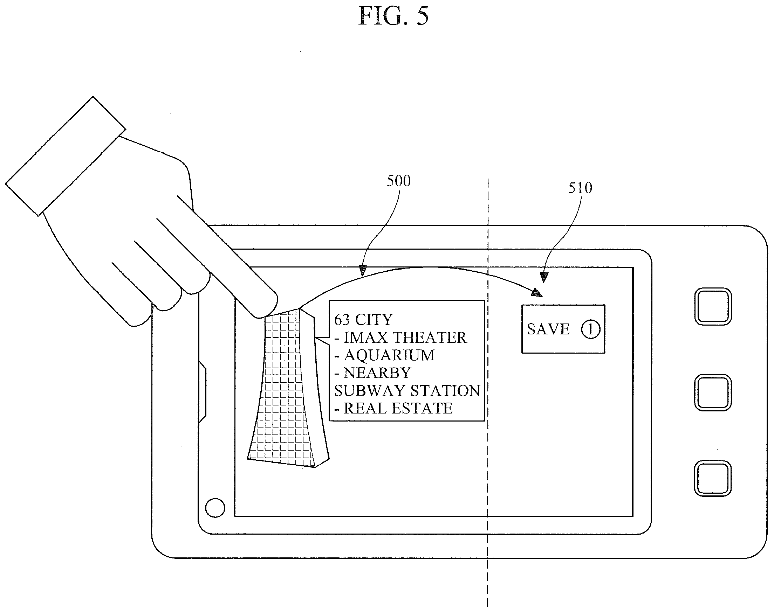

FIG. 5 is a diagram illustrating a display user interface (UI) device according to an exemplary embodiment of the present invention.

Referring to FIG. 5 , the display UI device may include a first region 500 and a second region 510. Objects detected from an image captured by a camera and their respective attribute information received from an object server may be displayed in the first region 500. The second region 510 may be used to store the objects displayed in the first region 500 and their respective attribute information in the terminal device. In an exemplary embodiment, the objects may be a representations or icons of objects captured by a camera. If multiple objects and multiple pieces of attribute information of each of the objects are displayed in the first region 500, a user may select any one of the objects or the multiple pieces of attribute information of each of the objects from the first region 500.

If the user selects one of the objects displayed in the first region 500 and drags and drops the selected object from the first region 500 onto a 'Save' icon ① in the second region 510, then the display UI device may save the selected object and the multiple pieces of attribute information about the selected object. In other words, the user can easily save each of the objects displayed in the first region 500 and attribute information associated with the objects by selecting a corresponding object and moving the corresponding object from the first region 500 to the second region 510.

As described above, according to aspects of the present invention, it may be possible to easily save objects and their attribute information displayed on a terminal device, thereby allowing the objects and attribute information to be used for various purposes, at a same or later time, without the need for a user to actually visit the location where the objects are located. In addition, it may be possible to facilitate the use of object attribute information of interest by redetermining the order of display of multiple pieces of object attribute information according to the preference of a user and displaying the multiple pieces of object attribute information on the display unit of the terminal device in the redetermined order. Moreover, it may be possible to facilitate access to object attribute information and its related information with the aid of a related attribute information guide.

Furthermore, it may be possible to improve user convenience by allowing objects and their attribute information to be saved with the aid of a drag-and-drop command on a display UI.

It will be apparent to those skilled in the art that various modifications and variation can be made in the present invention without departing from the scope of the invention. Thus, it is intended that the present invention cover the modifications and variations of this invention provided they come within the scope of the appended claims.

## Claims

1. A terminal device, comprising:
a communication unit (100) to communicate data with an object server, and to receive at least one image of at least one object and attribute information of the at least one object from the object server;
a display unit (150) to display the at least one object and the received attribute information of the at least one object;
a touch sensor unit (110) to sense an object selected from the at least one displayed object;
an object image detector (121) to detect an image of the selected object; and
a control unit (120) to store the detected image of the selected object and the received attribute information of the selected object in a user database, DB, (130).

2. The terminal device of claim 1, wherein the control unit (120) comprises:
the object image detector (121); and
an object information processor (122) adapted to store the image of the selected object and the attribute information about the selected object in the user DB (130) and/or to transmit the image of the selected object and the attribute information about the selected object to the object server.

3. The terminal device of claim 2, wherein the object information processor (122) is adapted to store the image of the selected object and the attribute information about the selected object in the user DB (130) in response to a drag-and-drop-type request.

4. The terminal device of claim 2 or 3, further comprising:
a preference information DB (140) adapted to store preference information of the attribute information about the selected object.

5. The terminal device of one of claims 2 to 4, wherein the object information processor (122) further comprises:
a preference processor (123) adapted to determine a preference level of multiple pieces of attribute information about the selected object based on the preference information stored in the preference information DB (140) and to determine an order in which the attribute information about the selected object is displayed on the display unit (150) based on the determined preference level.

6. The terminal device of claim 5, wherein the user DB (130) stores usage information comprising at least one of a frequency, a duration, and a location of use of the attribute information about the selected object, and combinations thereof.

7. The terminal device of claim 5 or 6, wherein the preference processor (123) is adapted to redetermine the preference level of the attribute information about the selected object and to redetermine the order in which the attribute information about the selected object is displayed on the display unit based on usage information stored in the user DB (130) and the redetermined preference levels, the usage information comprising at least one of a frequency, a duration, and a location of use, and combinations thereof of the attribute information of the selected object.

8. The terminal device of one of claims claims 5 to 7, wherein the object information processor (122) further comprises:
an object update processor (124) adapted to receive updated attribute information about the selected object from the object server,
wherein the terminal device displays the received updated attribute information on the display unit (150).

9. The terminal device of one of claims 2 to 8, wherein the object information processor (122) further comprises:
a related attribute information processor (125) adapted to receive related attribute information, which is additional information related to the attribute information guide from the object server, and
to display the received related attribute information in form of a related attribute information guide on the display unit (150).

10. A method for storing an image of an object and attribute information of the object in a user database, DB, (130), the method comprising:
- displaying (300) at least one object and attribute information of the at least one object on a display unit, at least one image of the at least one object and the attribute information being received from an object server;
- sensing an object selected from the at least one displayed object;
- detecting (310) an image of the selected object; and
- storing (320) the detected image of the selected object and the received attribute information of the selected object in the user DB (130).

11. The method of claim 10, wherein the storing (320) of the detected object image of the selected object and the received attribute information comprises:
obtaining preference information of the selected object;
determining a preference level of the attribute information of the selected object based on the preference information; and
determining an order in which the attribute information of the selected object is displayed on the display unit (150) based on the determined preference level.

12. The method of claim 10 or 11, wherein the storing (320) of the detected object image of the selected object and the received attribute information comprises:
if the detected object image and the received attribute information are displayed on the display unit (150), obtaining preference information about the received attribute information from a preference information DB (140);
obtaining usage information about the received attribute information from the preference information DB;
redetermining preference levels of the received attribute information based on the obtained preference information and the obtained usage information; and
redetermining an order in which the received attribute information is displayed on the display unit (150) based on the redetermined preference levels.

13. The method of claim 12, wherein the usage information comprises at least one of a frequency, a duration, and a location of use of the attribute information, and combinations thereof.

14. The terminal device according to one of claims 1 to 9, wherein the display unit (150) comprising:
a first region (500) in which the at least one object and the attribute information of the at least one object are displayed; and
a second region (510) which recognizes an object selected from the first region (500) and stores the attribute information of the recognizee object.

15. The terminal device according to claim 14, wherein the terminal device is adapted to store the image of the recognized object or the attribute information moved from the first region (500) to the second region (510) by a drag-and-drop action.

## Patentansprüche

1. Endgerät, umfassend:
eine Kommunikationseinheit (100), um Daten mit einem Objektserver zu Kommunizieren und um mindestens ein Bild des mindestens eines Objekts und die Attributinformation des mindestens eines Objekts vom Objektserver zu empfangen;
eine Anzeigeeinheit (150) zum Anzeigen des mindestens eines Objekts und der empfangenen Attributinformation des mindestens eines Objekts;
eine Berührungssensoreinheit (110) zum Erfassen eines Objekts ausgewählt aus mindestens einem angezeigten Objekt;
einen Objektbilddetektor (121) zum Detektieren eines Bildes des ausgewählten Objekts; und
eine Steuereinheit (120) zum Speichern des detektierten Bildes des ausgewählten Objekts und der empfangenen Attributinformation des ausgewählten Objekts in einer Benutzerdatenbank(DB) (130).

2. Endgerät nach Anspruch 1, wobei die Steuereinheit (120) umfasst:
den Objektbilddetektor (121); und
einen Objektinformationsprozessor (122), der dazu angepasst ist, um das Bild des ausgewählten Objekts und die Attributinformation über das ausgewählte Objekt in der Benutzerdatenbank (130) zu speichern und/oder um das Bild des ausgewählten Objekts und die Attributinformation über das ausgewählte Objekt an den Objektserver zu übertragen.

3. Endgerät nach Anspruch 2, wobei der Objektinformationsprozessor (122) dazu angepasst ist, um das Bild des ausgewählten Objekts und die Attributinformation über das ausgewählte Objekt als Reaktion auf eine Anforderung vom Drag & Drop-Typ in der Benutzerdatenbank (130) zu speichern.

4. Endgerät nach Anspruch 2 oder 3, ferner umfassend:
eine Präferenzinformationsdatenbank(140), die dazu angepasst ist, um Präferenzinformation der Attributinformation über das ausgewählte Objekt zu speichern.

5. Endgerät nach einem der Ansprüche 2 bis 4, wobei der Objektinformationsprozessor (122) ferner umfasst:
einen Präferenzprozessor (123), der dazu angepasst ist, um eine Präferenzstufe von mehreren Attributinformationen über das ausgewählte Objekt basierend auf der in der Präferenzinformationsdatenbank (140) gespeicherten Präferenzinformation zu bestimmen und um eine Reihenfolge zu bestimmen, in der die Attributinformation über das ausgewählte Objekt auf der Anzeigeeinheit (150) basierend auf der bestimmten Präferenzstufe angezeigt wird.

6. Endgerät nach Anspruch 5, wobei die Benutzerdatenbank (130) Anwendungsinformation speichert, die mindestens eines von einer Frequenz, einer Dauer und einem Ort der Anwendung von der Attributinformation über das ausgewählte Objekt sowie Kombinationen davon umfasst.

7. Endgerät nach Anspruch 5 oder 6, wobei der Präferenzprozessor (123) dazu angepasst ist, um die Präferenzstufe der Attributinformation über das ausgewählte Objekt neu zu bestimmen und um die Reihenfolge neu zu bestimmen, in der die Attributinformation über das ausgewählte Objekt auf der Anzeigeeinheit basierend auf der in der Benutzerdatenbank (130) gespeicherte Anwendungsinformation und den neu bestimmten Präferenzstufen angezeigt wird, wobei die Anwendungsinformation mindestens eines von einer Frequenz, einer Dauer und einem Ort der Anwendung von der Attributinformation des ausgewählten Objekts sowie Kombinationen davon umfasst.

8. Endgerät nach einem der Ansprüche 5 bis 7, wobei der Objektinformationsprozessor (122) ferner umfasst:
einen Objektaktualisierungsprozessor (124), der dazu angepasst ist, um aktualisierte Attributinformation über das ausgewählte Objekt vom Objektserver zu empfangen,
wobei das Endgerät die empfangene aktualisierte Attributinformation auf der Anzeigeeinheit (150) anzeigt.

9. Endgerät nach einem der Ansprüche 2 bis 8, wobei der Objektinformationsprozessor (122) ferner umfasst:
einen zugehörigen Attributinformationsprozessor (125), der dazu angepasst ist, um zugehörige Attributinformation vom Objektserver zu empfangen, bei der es sich um zusätzliche Information handelt, die sich auf den Attributinformationsleitfaden bezieht, und um die empfangene zugehörige Attributinformation in Form eines zugehörigen Attributinformationsleitfadens auf der Anzeigeeinheit (150) anzuzeigen.

10. Verfahren zum Speichern eines Bildes eines Objekts und der Attributinformation des Objekts in einer Benutzerdatenbank(DB) (130), wobei das Verfahren die folgenden Schritte umfasst:
- Anzeigen (300) mindestens eines Objekts und der Attributinformation des mindestens eines Objekts auf einer Anzeigeeinheit, wobei mindestens ein Bild des mindestens eines Objekts und die Attributinformation von einem Objektserver empfangen wird;
- Erfassen eines Objekts, das aus mindestens einem angezeigten Objekt ausgewählt wurde;
- Detektieren (310) eines Bildes des ausgewählten Objekts; und
- Speichern (320) des detektierten Bildes des ausgewählten Objekts und der empfangenen Attributinformation des ausgewählten Objekts in der Benutzerdatenbank (130).

11. Verfahren nach Anspruch 10, wobei das Speichern (320) des detektierten Objektbildes des ausgewählten Objekts und der empfangenen Attributinformation die folgenden Schritte umfasst:
- Erhalten der Präferenzinformation des ausgewählten Objekts;
- Bestimmen einer Präferenzstufe der Attributinformation des ausgewählten Objekts basierend auf der Präferenzinformation; und
- Bestimmen einer Reihenfolge, in der die Attributinformation des ausgewählten Objekts auf der Anzeigeeinheit (150) basierend auf der bestimmten Präferenzstufe angezeigt wird.

12. Verfahren nach Anspruch 10 oder 11, das Speichern (320) des detektierten Objektbildes des ausgewählten Objekts und der empfangenen Attributinformation die folgenden Schritte umfasst:
- Erhalten der Präferenzinformation über die empfangene Attributinformation aus einer Präferenzinformationsdatenbank (140), wenn das detektierte Objektbild und die empfangene Attributinformation auf der Anzeigeeinheit (150) angezeigt wird;
- Erhalten der Anwendungsinformation über die empfangene Attributinformation aus der Präferenzinformationsdatenbank;
- Neubestimmen der Präferenzstufen der empfangenen Attributinformation basierend auf der erhaltenen Präferenzinformation und der erhaltenen Anwendungsinformation; und
- Neubestimmen einer Reihenfolge, in der die empfangene Attributinformation auf der Anzeigeeinheit (150) basierend auf den neu bestimmten Präferenzstufen angezeigt wird.

13. Verfahren nach Anspruch 12, wobei die Anwendungsinformation mindestens eines von einer Frequenz, einer Dauer und einem Ort der Anwendung von der Attributinformation sowie Kombinationen davon umfasst.

14. Endgerät nach einem der Ansprüche 1 bis 9, wobei die Anzeigeeinheit (150) umfasst:
einen ersten Bereich (500), in dem das mindestens ein Objekt und die Attributinformation des mindestens eines Objekts angezeigt werden; und
einen zweiten Bereich (510), der ein aus dem ersten Bereich (500) ausgewähltes Objekt erkennt und die Attributinformation des erkannten Objekts speichert.

15. Endgerät nach Anspruch 14, wobei das Endgerät dazu angepasst ist, um das Bild des erkannten Objekts oder die Attributinformation zu speichern, die durch Drag & Drop-Aktion von dem ersten Bereich (500) in den zweiten Bereich (510) bewegt wird.

## Revendications

1. Un dispositif terminal, comprenant:
une unité de communication (100) pour communiquer des données avec un serveur d'objets, et pour recevoir au moins une image d'au moins un objet et des informations d'attribut de l'au moins un objet du serveur d'objets;
une unité d'affichage (150) pour afficher l'au moins un objet et les informations d'attribut reçues de l'au moins un objet;
une unité de capteur tactile (110) pour détecter un objet sélectionné parmi l'au moins un objet affiché;
un détecteur d'image d'objet (121) pour détecter une image de l'objet sélectionné; et
une unité de commande (120) pour stocker l'image détectée de l'objet sélectionné et les informations d'attribut reçues de l'objet sélectionné dans une base de donnée, DB, d'utilisateur (130).

2. Dispositif terminal selon la revendication 1, dans lequel l'unité de commande (120) comprend:
le détecteur d'image d'objet (121); et
un processeur d'informations d'objet (122) adapté pour stocker l'image de l'objet sélectionné et les informations d'attribut sur l'objet sélectionné dans le DB d'utilisateur (130) et / ou pour transmettre l'image de l'objet sélectionné et les informations d'attribut sur l'objet sélectionné sur le serveur d'objets.

3. Dispositif terminal selon la revendication 2, dans lequel le processeur d'informations d'objet (122) est adapté pour stocker l'image de l'objet sélectionné et les informations d'attribut concernant l'objet sélectionné dans la base de donnée d'utilisateur (130) en réponse à une requête de type glisser-déposer.

4. Dispositif terminal selon la revendication 2 ou 3, comprenant en outre:
une base de donnée d'informations de préférence (140) adaptée pour stocker des informations de préférence des informations d'attribut concernant l'objet sélectionné.

5. Dispositif terminal selon l'une des revendications 2 à 4, dans lequel le processeur d'informations d'objet (122) comprend en outre:
un processeur de préférence (123) adapté pour déterminer un niveau de préférence de plusieurs éléments d'informations d'attribut sur l'objet sélectionné sur la base des informations de préférence stockées dans le DB d'informations de préférence (140) et pour déterminer un ordre dans lequel les informations d'attribut concernant l'objet sélectionné est affiché sur l'unité d'affichage (150) sur la base du niveau de préférence déterminé.

6. Dispositif terminal selon la revendication 5, dans lequel le DB d'utilisateur (130) stocke des informations d'utilisation comprenant au moins l'une parmi une fréquence, une durée et un emplacement d'utilisation des informations d'attribut concernant l'objet sélectionné, et leurs combinaisons.

7. Dispositif terminal selon la revendication 5 ou 6, dans lequel le processeur de préférence (123) est adapté pour redéterminer le niveau de préférence des informations d'attribut sur l'objet sélectionné et pour redéterminer l'ordre dans lequel les informations d'attribut concernant l'objet sélectionné sont affichées sur l'unité d'affichage basée sur les informations d'utilisation stockées dans la base de données utilisateur (130) et les niveaux de préférence redéterminés, les informations d'utilisation comprenant au moins l'une parmi une fréquence, une durée et un emplacement d'utilisation, et leurs combinaisons des informations d'attribut du objet sélectionné.

8. Dispositif terminal selon l'une des revendications 5 à 7, dans lequel le processeur d'informations d'objet (122) comprend en outre:
un processeur de mise à jour d'objet (124) adapté pour recevoir des informations d'attributs mises à jour sur l'objet sélectionné du serveur d'objets,
dans lequel le dispositif terminal affiche les informations d'attribut mises à jour reçues sur l'unité d'affichage (150).

9. Dispositif terminal selon l'une des revendications 2 à 8, dans lequel le processeur d'informations d'objet (122) comprend en outre:
un processeur d'informations d'attribut associé (125) adapté pour recevoir des informations d'attribut associées, qui sont des informations supplémentaires liées au guide d'informations d'attribut du serveur d'objets, et
pour afficher les informations d'attributs associées reçues sous la forme d'un guide d'informations d'attributs associés sur l'unité d'affichage (150).

10. Procédé pour stocker une image d'un objet et des informations d'attribut de l'objet dans une base de données, DB, d'utilisateur (130), le procédé comprenant:
- afficher (300) au moins un objet et des informations d'attribut de l'au moins un objet sur une unité d'affichage, au moins une image de l'au moins un objet et les informations d'attribut étant reçues d'un serveur d'objets;
- détecter un objet sélectionné parmi l'au moins un objet affiché;
- détecter (310) une image de l'objet sélectionné; et
- stocker (320) l'image détectée de l'objet sélectionné et les informations d'attribut reçues de l'objet sélectionné dans le DB d'utilisateur (130).

11. Procédé selon la revendication 10, dans lequel le stockage (320) de l'image d'objet détectée de l'objet sélectionné et des informations d'attribut reçues comprend:
obtenir des informations de préférence de l'objet sélectionné;
déterminer un niveau de préférence des informations d'attribut de l'objet sélectionné sur la base des informations de préférence; et
déterminer un ordre dans lequel les informations d'attribut de l'objet sélectionné sont affichées sur l'unité d'affichage (150) sur la base du niveau de préférence déterminé.

12. Procédé selon la revendication 10 ou 11, dans lequel le stockage (320) de l'image d'objet détectée de l'objet sélectionné et des informations d'attribut reçues comprend:
si l'image d'objet détectée et les informations d'attribut reçues sont affichées sur l'unité d'affichage (150), obtenir des informations de préférence concernant les informations d'attribut reçues à partir d'un DB d'informations de préférence (140);
obtenir des informations d'utilisation sur les informations d'attribut reçues à partir de la base de données d'informations de préférence;
redéterminer les niveaux de préférence des informations d'attribut reçues sur la base des informations de préférence obtenues et des informations d'utilisation obtenues; et
redéterminer un ordre dans lequel les informations d'attribut reçues sont affichées sur l'unité d'affichage (150) sur la base des niveaux de préférence redéterminés.

13. Procédé selon la revendication 12, dans lequel les informations d'utilisation comprennent au moins l'une parmi une fréquence, une durée et un emplacement d'utilisation des informations d'attribut, et leurs combinaisons.

14. Dispositif terminal selon l'une des revendications 1 à 9, dans lequel l'unité d'affichage (150) comprend:
une première région (500) dans laquelle l'au moins un objet et les informations d'attribut dudit au moins un objet sont affichés; et
une seconde région (510) qui reconnaît un objet sélectionné dans la première région (500) et stocke les informations d'attribut de l'objet reconnu.

15. Dispositif terminal selon la revendication 14, dans lequel le dispositif terminal est adapté pour stocker l'image de l'objet reconnu ou les informations d'attribut déplacées de la première région (500) vers la deuxième région (510) par un glisser-déposer action.
